(19) Europäisches Patentamt
European Patent Office
Office européen des brevets

(11) **EP 4 282 896 A1**

(12) **EUROPEAN PATENT APPLICATION**

(43) Date of publication:
**29.11.2023 Bulletin 2023/48**

(21) Application number: **23174184.4**

(22) Date of filing: **18.05.2023**

(51) International Patent Classification (IPC):
*C08G 63/183* (2006.01)    *C08G 63/78* (2006.01)
*C08G 63/85* (2006.01)    *C08J 5/18* (2006.01)
*C08K 3/22* (2006.01)    *C08L 67/02* (2006.01)
*C08L 1/02* (2006.01)

(52) Cooperative Patent Classification (CPC):
(C-Sets available)
**C08G 63/183; C08G 63/78; C08G 63/85;**
**C08J 5/18; C08K 3/22; C08L 67/02;** C08G 2230/00;
C08G 2250/00; C08J 2367/02; C08J 2401/02;
C08K 2003/2241                    (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **23.05.2022   KR 20220063109**

(71) Applicant: **Ecovance Co. Ltd**
**Suwon-si, Gyeonggi-do 16338 (KR)**

(72) Inventors:
• **KIM, Kyung Youn**
  **16338 Gyeonggi-do (KR)**
• **RYU, Ji Yeon**
  **16338 Gyeonggi-do (KR)**
• **KIM, Seong Dong**
  **16338 Gyeonggi-do (KR)**
• **KIM, Hoon**
  **16338 Gyeonggi-do (KR)**

(74) Representative: **Dehns**
**St. Bride's House**
**10 Salisbury Square**
**London EC4Y 8JD (GB)**

(54) **BIODEGRADABLE POLYESTER RESIN, PREPERATION METHOD THEREOF, AND BIODEGRADABLE POLYESTER FILM COMPRISING SAME**

(57)    Embodiments relate to a biodegradable polyester resin, to a process for preparing the same, and to a biodegradable polyester film comprising the same. The biodegradable polyester resin has peaks at a certain diffraction angle (2θ) in an X-ray diffraction spectrum (XRD), while it satisfies a crystal size in a specific range, whereby it has excellent crystallinity and thermal stability, and it is enhanced in all of the mechanical properties, dimensional stability, and moldability. Accordingly, the biodegradable polyester resin according to the embodiment can be applied to various fields that require thermal resistance, mechanical properties, dimensional stability, and moldability, such as packaging materials such as disposable bags and food containers, and automobile interior parts, so that they would exhibit excellent characteristics.

[Fig. 1]

**(Cont. next page)**

EP 4 282 896 A1

(52) Cooperative Patent Classification (CPC): (Cont.)

C-Sets
**C08K 3/22, C08L 67/02;**
**C08L 67/02, C08L 1/02**

**Description**

**Technical Field**

Embodiments relate to a biodegradable polyester resin, to a process for preparing the same, and to a biodegradable polyester film comprising the same.

**Background Art**

In recent years, as concerns about environmental issues have increased, there is a need for a solution to the problem of dealing with various household products, in particular, disposable products. Specifically, although polymer materials, which are inexpensive and have excellent processability, are widely used to manufacture various products such as films, fibers, packaging materials, bottles, and containers, when the lifespan of these products is over, harmful substances are discharged when they are incinerated, and it takes hundreds of years depending on their types to completely decompose naturally.

In order to overcome the limitations of these polymers, studies on biodegradable polymers that can be decomposed in a much faster time are being actively conducted. Although polylactic acid (PLA), polybutyleneadipate terephthalate (PBAT), polybutylene succinate (PBS), polybutylene succinate terephthalate (PBST), polybutylene succinate adipate (PBSA), and the like are used as biodegradable polymers, they have low crystallinity and thermal stability as compared with non-degradable resins such as polyethylene terephthalate (PET). Accordingly, there is a demand for research on biodegradable polymers that have excellent crystallinity and thermal stability, without deteriorating biodegradability and mechanical properties, thereby enhancing dimensional stability and moldability.

For example, Korean Laid-open Patent Publication No. 2007-0007281 discloses a biodegradable resin composition having enhanced crystallinity by adding a crystal nucleating agent to a biodegradable resin. However, there is a limit to enhancing the crystallinity using a crystal nucleating agent. Since it must be carried out at a low temperature for a long period of time to stabilize the crystal nuclei, the process and its conditions are complicated.

[Prior Art Document]

[Patent Document]

(Patent Document 1) Korean Laid-open Patent Publication No. 2007-0007281

**Disclosure of Invention**

**Technical Problem**

Accordingly, the embodiments aim to provide a biodegradable polyester resin having excellent crystallinity and thermal stability, thereby enhancing all of the mechanical properties, dimensional stability, and moldability, a process for preparing the same, and a biodegradable polyester film comprising the same.

**Solution to Problem**

The biodegradable polyester resin according to an embodiment comprises a diol residue, an aromatic dicarboxylic acid residue, and an aliphatic dicarboxylic acid residue, and has peaks at a diffraction angle (2Θ) of $17.3 \pm 0.3°$, $20.4 \pm 0.3°$, $23.3 \pm 0.3°$, and $25.0 \pm 0.3°$ in an X-ray diffraction spectrum (XRD) and a crystal size of 50 Å to 80 Å according to the following Equation 1.

[Equation 1]

$$Crystal\ size\ (\text{Å}) = \frac{0.9\lambda}{\beta \cos \theta}$$

In Equation 1, $\lambda$ is the wavelength (nm) in the X-ray diffraction spectrum (XRD), $\beta$ is the full width at half maximum (FWHM) at the diffraction angle (2Θ), $\theta$ is the half value of the diffraction angle (2Θ), and the X-ray diffraction spectrum (XRD) has been measured at a diffraction angle (2θ) of 10° to 35° at a scan rate of 5°/minute.

The process for preparing a biodegradable polyester resin according to another embodiment comprises mixing a diol and an aromatic dicarboxylic acid and pretreating the mixture to obtain a slurry; subjecting the slurry to a first esterification reaction, adding an aliphatic dicarboxylic acid or a diol and an aliphatic dicarboxylic acid to the resultant, and subjecting them to a second esterification reaction to obtain a prepolymer; and subjecting the prepolymer to a polycondensation reaction to obtain a polymer, wherein the biodegradable polyester resin comprises a diol residue, an aromatic dicarboxylic acid residue, and an aliphatic dicarboxylic acid residue, and the biodegradable polyester resin has peaks at a diffraction angle (2Θ) of 17.3 ± 0.3°, 20.4 ± 0.3°, 23.3 ± 0.3°, and 25.0 ± 0.3° in an X-ray diffraction spectrum (XRD), and the biodegradable polyester resin has a crystal size of 50 Å to 80 Å according to the above Equation 1.

The biodegradable polyester film according to another embodiment comprises a biodegradable polyester resin, wherein the biodegradable polyester resin comprises a diol residue, an aromatic dicarboxylic acid residue, and an aliphatic dicarboxylic acid residue, the biodegradable polyester resin has peaks at a diffraction angle (2Θ) of 17.3 ± 0.3°, 20.4 ± 0.3°, 23.3 ± 0.3°, and 25.0 ± 0.3° in an X-ray diffraction spectrum (XRD), and the biodegradable polyester resin has a crystal size of 50 Å to 80 Å according to the above Equation 1.

**Advantageous Effects of Invention**

The biodegradable polyester resin according to an embodiment has peaks at a diffraction angle (2Θ) of 17.3 ± 0.3°, 20.4 ± 0.3°, 23.3 ± 0.3°, and 25.0 ± 0.3° in an X-ray diffraction spectrum (XRD), while it satisfies a crystal size in a specific range according to Equation 1, whereby it has excellent crystallinity and thermal stability, and it is enhanced in all of the mechanical properties, dimensional stability, and moldability.

Accordingly, the biodegradable polyester resin can be applied to various fields that require thermal resistance, mechanical properties, dimensional stability, and moldability, such as packaging materials such as disposable bags and food containers, and automobile interior parts, so that they would exhibit excellent characteristics.

**Brief Description of Drawing**

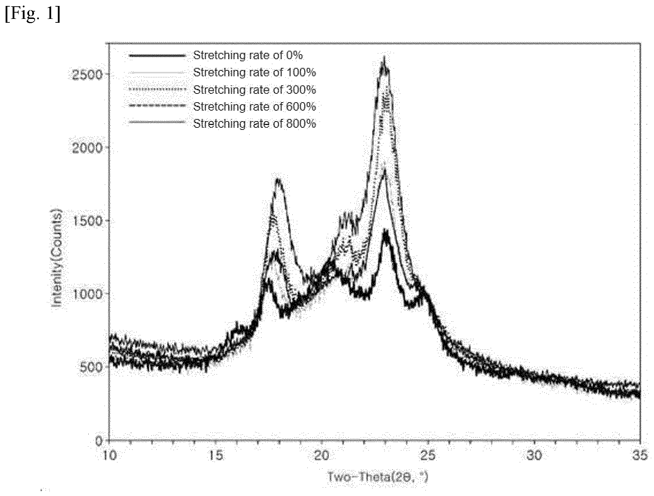

Fig. 1 shows the X-ray diffraction (XRD) results of the biodegradable polyester film of Example 2-2.

**Best Mode for Carrying out the Invention**

Hereinafter, the present invention will be described in detail with reference to embodiments. The embodiments are not limited to those described below. Rather, they can be modified into various forms as long as the gist of the invention is not altered.

Throughout the present specification, when a part is referred to as "comprising" an element, it is understood that other elements may be comprised, rather than other elements are excluded, unless specifically stated otherwise.

In addition, all numbers expressing the physical properties, dimensions, and the like of elements used herein are to be understood as being modified by the term "about" unless otherwise indicated.

Throughout the present specification, the terms first, second, and the like are used to describe various components. But the components should not be limited by the terms. The terms are used only for the purpose of distinguishing one component from another.

Polylactic acid (PLA), polybutyleneadipate terephthalate (PBAT), polybutylene succinate (PBS), polybutylene succinate terephthalate (PBST), polybutylene succinate adipate (PBSA), and the like used as biodegradable polymers have low crystallinity and thermal stability as compared with non-degradable resins such as polyethylene terephthalate (PET).

Specifically, in order to manufacture a molded article such as films from a resin, a stretching process, an extrusion process, a blowing process, an injection process, and the like are carried out. Polyethylene terephthalate (PET), a non-degradable resin, has excellent crystallinity and fast crystallization speed, so that orientation crystals or thermal crystals attributed to stretching orientation are formed during the manufacturing process, resulting in excellent mechanical properties and dimensional stability; however, there is a problem in that a recycling process must be additionally carried out in order to solve the environmental issues.

In this regard, resins copolymerized with two or more monomers (comonomers) such as polybutyleneadipate terephthalate (PBAT), polybutylene succinate (PBS), polybutylene succinate terephthalate (PBST), and polybutylene succinate adipate (PBSA), or resins containing isomers of L-type and D-type such as polylactic acid (PLA) are biodegradable polymers, whereas they have low crystallinity and slow crystallization speed, so that orientation crystals or thermal crystals attributed to stretching orientation would not be formed. Thus, they have low thermal stability or high thermal shrinkage as compared with non-degradable resins such as polyethylene terephthalate (PET). In particular, these biodegradable polymers have low dimensional stability, which is the capability to maintain their original shape even under various environmental conditions, making it difficult to apply them to various fields.

However, the biodegradable polyester resin according to an embodiment has peaks at a diffraction angle (2Θ) of 17.3 ± 0.3°, 20.4 ± 0.3°, 23.3 ± 0.3°, and 25.0 ± 0.3° in an X-ray diffraction spectrum (XRD), while it satisfies a crystal size of 50 Å to 80 Å according to Equation 1, whereby it has enhanced crystallinity and excellent thermal stability, and it is enhanced in all of the mechanical properties, dimensional stability, and moldability. In particular, the biodegradable polyester resin according to an embodiment comprises an aromatic dicarboxylic acid with a specific particle size and a specific standard deviation thereof, thereby further enhancing crystallinity and thermal stability.

Accordingly, the biodegradable polyester resin can be applied to various fields that require thermal resistance, mechanical properties, dimensional stability, and moldability, such as packaging materials such as disposable bags and food containers, and automobile interior parts, so that they would exhibit excellent characteristics.

## Biodegradable polyester resin

The biodegradable polyester resin according to an embodiment comprises a diol residue, an aromatic dicarboxylic acid residue, and an aliphatic dicarboxylic acid residue, and has peaks at a diffraction angle (2Θ) of 17.3 ± 0.3°, 20.4 ± 0.3°, 23.3 ± 0.3°, and 25.0 ± 0.3° in an X-ray diffraction spectrum (XRD) and a crystal size of 50 Å to 80 Å according to the following Equation 1.

[Equation 1]

$$Crystal\ size\ (\mathring{A}) = \frac{0.9\lambda}{\beta \cos\theta}$$

In Equation 1, $\lambda$ is the wavelength (nm) in the X-ray diffraction spectrum (XRD), $\beta$ is the full width at half maximum (FWHM) at the diffraction angle (2Θ), $\theta$ is the half value of the diffraction angle (2θ), and the X-ray diffraction spectrum (XRD) has been measured at a diffraction angle (2θ) of 10° to 35° at a scan rate of 5°/minute.

The X-ray diffraction spectrum (XRD) may be measured using wide-angle X-ray scattering (WAXD), but it is not limited thereto.

For example, the crystal size of the biodegradable polyester resin according to Equation 1 may be 50 Å to 80 Å, 52 Å to 80 Å, 55 Å to 80 Å, 55 Å to 78 Å, 55 Å to 76 Å, 57 Å to 76 Å, 58 Å to 75 Å, 58 Å to 73 Å, or 60 Å to 72 Å. As the crystal size of the biodegradable polyester resin satisfies the above range, both crystallinity and thermal stability may be enhanced without deteriorating mechanical properties.

In addition, the full width at half maximum (FWHM) at the diffraction angle (2Θ) may be less than 1.0°/2θ. Specifically, the full width at half maximum refers to the width of half the value (intensity) of a peak. The full width at half maximum (FWHM) at each diffraction angle (2Θ) may be 0.9°/2θ or less, 0.85°/2θ or less, 0.8°/2θ or less, 0.75°/2θ or less, 0.7°/2θ or less, 0.65°/2θ or less, 0.6°/2θ or less, or 0.55°/2θ or less. As the full width at half maximum (FWHM) at each diffraction angle (2Θ) satisfies the above range, crystallinity and thermal stability may be further enhanced without deteriorating mechanical properties.

The biodegradable polyester resin may have a crystallization temperature (Tc) of 35°C to 65°C when measured by differential scanning calorimetry (DSC). For example, the crystallization temperature (Tc) of the biodegradable polyester resin measured by differential scanning calorimetry may be 35°C to 65°C, 35°C to 60°C, or 40°C to 65°C.

In addition, the biodegradable polyester resin may have a heat of crystal fusion (Hmci) of 19.1 J/g or more when measured by differential scanning calorimetry. For example, the heat of crystal fusion (Hmci) of the biodegradable polyester resin measured by differential scanning calorimetry may be 19.3 J/g or more, 19.4 J/g or more, 19.5 J/g or more, or 19.6 J/g or more.

As the crystallization temperature and the heat of crystal fusion each satisfy the above ranges, crystallinity and thermal stability may be further enhanced without deteriorating mechanical properties.

In addition, the biodegradable polyester resin may have a crystallinity of 8% or more when measured by differential scanning calorimetry. For example, the crystallinity of the biodegradable polyester resin measured by differential scanning calorimetry may be 9% or more, 11% or more, 14% or more, or 15% or more, or 8% to 20%, 9% to 19.5%, 11% to 18%, 14% to 17.5%, or 15% to 17%.

The crystallinity may be calculated as a value in percentage obtained by dividing the melting enthalpy ($\Delta H_m$) measured with a differential scanning calorimeter by the melting enthalpy ($\Delta H_c$) of 100% crystal. Specifically, it may be calculated according to the following Equation C.

[Equation C]

$$Crystallinity\ (\%) = \frac{\Delta H_m}{\Delta H_c} \times 100$$

The differential scanning calorimeter (DSC) may be specifically a modulated differential scanning calorimeter (modulated DSC or MDSC), more specifically a temperature-modulated differential scanning calorimeter (TMDSC), but it is not limited thereto.

Specifically, glass transition temperature (Tg), crystallization temperature (Tc), and melting temperature (Tm) may be measured by conducting a first scan or a second scan in a differential scanning calorimetry (DSC) mode, and they can be confirmed from a heat flow curve obtained by these scans.

More specifically, the exothermic peak measured while the temperature is raised from 40°C to 180°C at a rate of 10°C/minute and then cooled to -50°C at a rate of 10°C/minute is the crystallization temperature (Tc). Thereafter, the first exothermic peak and the second exothermic peak measured while the temperature is raised from -50°C to 180°C at a rate of 10°C/minute are the glass transition temperature (Tg) and melting temperature (Tm), respectively.

Here, the heat of crystal fusion ($Hmc_1$) may be calculated from the integral at the crystallization temperature (Tc), and the melting enthalpy ($\Delta H_m$) may be calculated from the integral at the melting point (Tm).

According to an embodiment, the biodegradable polyester resin comprises a diol residue, an aromatic dicarboxylic acid residue, and an aliphatic dicarboxylic acid residue.

Specifically, the diol residue may comprise a first diol residue and a second residue, each of which comprises a residue of 1,4-butanediol, 1,2-ethanediol, 1,3-propanediol, or a derivative thereof. In addition, the biodegradable polyester resin may comprise a first repeat unit comprising a first diol residue and an aromatic dicarboxylic acid residue and a second repeat unit comprising a second diol residue and an aliphatic dicarboxylic acid residue. As the biodegradable polyester resin comprises the first repeat unit and the second repeat unit, it is possible to enhance biodegradability and mechanical properties.

The diol residue may be a first diol residue and a second diol residue, each of which may comprise a residue of 1,4-butanediol, 1,2-ethanediol, 1,3-propanediol, or a derivative thereof. The first diol residue and second diol residue may be the same as, or different from, each other. Specifically, the diol residue may comprise a residue of 1,4-butanediol, 1,2-ethanediol, or a derivative thereof. More specifically, it may comprise 1,4-butanediol or a derivative thereof. If the diol residue comprises 1,4-butanediol or a derivative thereof, it may be more advantageous for enhancing biodegradability, mechanical properties such as tensile strength, and thermal resistance.

In addition, the aromatic dicarboxylic acid residue may comprise a residue of terephthalic acid, dimethyl terephthalate, or a derivative thereof, and the aliphatic dicarboxylic acid residue may comprise a residue of adipic acid, succinic acid, sebacic acid, or a derivative thereof.

According to an embodiment, the aromatic dicarboxylic acid may comprise terephthalic acid. Specifically, the terephthalic acid may have an average particle diameter (D50) of 10 μm to 400 μm in a particle size distribution (PSD) measured with a particle size analyzer Microtrac S3500 and a standard deviation of the average particle diameter (D50) of 100 or less.

Specifically, in the case where the aromatic dicarboxylic acid comprises terephthalic acid, terephthalic acid is a white crystal that has perfect crystallinity and sublimes at around 300°C under normal pressure without a melting point, and it has very low solubility in the diol, making it difficult to carry out a homogeneous reaction. As the aromatic dicarboxylic acid according to an embodiment comprises terephthalic acid having an average particle diameter and a standard deviation thereof within the above ranges, it is possible to further enhance crystallinity and thermal stability.

For example, the average particle diameter (D50) of terephthalic acid may be 15 μm to 400 μm, 20 μm to 250 μm, 35 μm to 215 μm, 40 μm to 180 μm, 50 μm to 165 μm, 75 μm to 150 μm, or 90 μm to 130 μm.

In addition, the standard deviation of the average particle diameter (D50) of terephthalic acid may be 90 or less, 80 or less, 65 or less, 50 or less, or 30 or less, or 5 to 90, 5 to 70, 10 to 60, 12 to 45, 15 to 40, or 15 to 30.

As the average particle diameter of terephthalic acid and the standard deviation thereof each satisfy the above ranges, it is possible to enhance the solubility in a diol, and it may be more advantageous from the viewpoint of esterification reaction rate in a subsequent process. Specifically, as the average particle diameter of terephthalic acid and the standard deviation thereof each satisfy the above ranges, the reaction time can be shortened by 1.5 times or more, without deteriorating physical properties, so that it may be more preferable in terms of reaction efficiency.

In addition, if the average particle diameter (D50) of terephthalic acid is less than 10 μm, the average particle diameter (D50) is too small, so that the primary particles may be undesirably converted to aggregated secondary particles. If the average particle diameter (D50) of terephthalic acid exceeds 400 μm, the average particle diameter (D50) is too large, so that the solubility in diols is reduced, thereby lowering the esterification reaction rate, and it may be difficult to achieve a homogenization reaction.

According to another embodiment, the aromatic dicarboxylic acid may comprise dimethyl terephthalate. Specifically, dimethyl terephthalate may be in a molten state, or it, when measured in a particle state, may have an average particle diameter (D50) and a standard deviation thereof similar to those of terephthalic acid.

Specifically, the first repeat unit may comprise a residue of 1,4-butanediol or a derivative thereof and a residue of terephthalic acid or a derivative thereof. Alternatively, the first repeat unit may comprise a residue of 1,4-butanediol or a derivative thereof and a residue of dimethyl terephthalate or a derivative thereof.

In addition, the second repeat unit may comprise a residue of 1,4-butanediol or a derivative thereof and a residue of adipic acid or a derivative thereof. Alternatively, the second repeat unit may comprise a residue of 1,4-butanediol or a derivative thereof and a residue of succinic acid or a derivative thereof.

As the first repeat unit and the second repeat unit satisfy the above configuration, it is possible to further enhance biodegradability, mechanical properties such as tensile strength, and thermal resistance.

Specifically, in order for the biodegradable polyester resin according to an embodiment to have excellent biodegradability, along with enhanced mechanical properties, dimensional stability, moldability, and productivity, it is very important to control the numbers of the first repeat unit and the second repeat unit constituting the biodegradable polyester resin.

In general, polyester resins, such as polybutyleneadipate terephthalate (PBAT)-based resins, have excellent flexibility. On the other hand, they have poor impact resistance, which may easily cause tearing or bursting, and they have weak stiffness, whereby their use is limited. However, as the numbers of the first repeat unit and the second repeat unit in the biodegradable polyester resin are controlled, it is possible to enhance all of the biodegradability, mechanical properties, dimensional stability, and productivity.

Specifically, the ratio (X/Y) of the number of the first repeat unit (X) to the number of the second repeat unit (Y) may be 0.8 to 3.0. For example, the ratio (X/Y) of the number of the first repeat unit (X) to the number of the second repeat unit (Y) may be 0.8 to 2.9, 0.8 to 2.55, 0.83 to 2.15, 0.85 to 1.9, 0.85 to 1.65, 0.9 to 1.4, 0.9 to 1.2, or 0.95 to 1.05.

As the ratio (X/Y) of the number of the first repeat unit (X) to the number of the second repeat unit (Y) satisfies the above range, it is possible to enhance mechanical properties such as tensile strength. In particular, when the biodegradable polyester resin is used in a blowing process, it is possible to enhance bubble stability such that the bubbles do not burst while the bubbles have a uniform shape. In addition, when the biodegradable polyester resin is used in an injection process, it is possible to effectively prevent fish eyes or fusion between the surfaces of films, thereby enhancing quality and processability.

Specifically, if the number of the second repeat unit is equal to, or greater than, the number of the first repeat unit, excellent durability and thermal resistance may be maintained for a certain period of time, and biodegradability is not deteriorated, so that biodegradation can be achieved sufficiently and effectively after its use.

In addition, the number of the first repeat unit (X) may be 100 to 900. For example, the number of the first repeat unit (X) may be 105 to 750, 130 to 500, 145 to 350, 150 to 300, 165 to 240, or 170 to 190.

The number of the second repeat unit (Y) may be 100 to 1,100. For example, the number of the second repeat unit (Y) may be 115 to 1,000, 135 to 850, 150 to 600, 155 to 450, 160 to 280, 165 to 230, or 175 to 205.

As the number of the first repeat unit (X) and the number of the second repeat unit (Y) each satisfy the above ranges, it is possible to enhance all of the biodegradability, mechanical properties, thermal resistance, dimensional stability, moldability, and productivity.

In particular, since the second repeat unit comprising the second diol residue and the aliphatic dicarboxylic acid residue is composed of a linear chain, it comprises an aliphatic dicarboxylic acid residue that may have an impact on adhesive properties; thus, crystallinity may be controlled according to its content, and, as the above range is satisfied, the enhancement in mechanical properties such as tensile strength and in thermal resistance can be maximized.

According to an embodiment, the biodegradable polyester resin may comprise the first repeat unit and the second repeat unit in the form of a block copolymer.

Specifically, as the first repeat unit and the second repeat unit are employed in the form of a block copolymer, it is advantageous for forming microcrystals when orientation crystals are formed in a stretching process using the biodegradable polyester resin, and steric hindrance does not take place; thus, crystallization can take place sufficiently and effectively. Therefore, the biodegradable polyester resin comprising the first repeat unit and the second repeat unit in the form of a block copolymer can induce orientation crystals by stretching to form a dense crystal structure; thus, it is possible to maximize mechanical properties such as tensile strength and dimensional stability of a molded article, in particular, a film, manufactured therefrom.

In addition, the biodegradable polyester resin may comprise a cellulose-based additive. As the biodegradable polyester resin comprises a cellulose-based additive, biodegradability, crystallinity, thermal stability, and mechanical properties such as tensile strength, and dimensional stability can be further enhanced.

Specifically, the cellulose-based additive may be one or more selected from the group consisting of cellulose nanocrystal, cellulose nanofiber, microfibrillated cellulose, hydroxymethyl cellulose, hydroxyethyl cellulose, hydroxypropyl cellulose, hydroxypropylmethyl cellulose, cellulose acetate, methyl cellulose, ethyl cellulose, propyl cellulose, butyl cellulose, pentyl cellulose, hexyl cellulose, and cyclohexyl cellulose. Cellulose nanocrystals or cellulose nanofibers are preferred in terms of strength and thermal properties, but it is not limited thereto.

The cellulose-based additive may have an average particle size of 100 nm or more and a particle size deviation of 32% or less. For example, the average particle size of the cellulose-based additive may be 100 nm or more, 120 nm or more, 140 nm or more, or 150 nm or more, or 100 nm to 1,500 nm, 115 nm to 1,200 nm, 120 nm to 900 nm, 135 nm to 650 nm, 145 nm to 500 nm, 150 nm to 350 nm, 152 nm to 290 nm, 155 nm to 215 nm, or 155 nm to 190 nm. The particle size deviation of the cellulose-based additive may be 31% or less, 30% or less, or 29.5% or less.

The average particle size and particle size deviation of the cellulose-based additive may be measured with a nano particle size analyzer (e.g., Zetasizer Nano ZS). Specifically, the cellulose-based additive may be measured for the average particle size and particle size deviation with Zetasizer Nano ZS (manufacturer: Marven) using Zetasizer software. More specifically, the average particle size and particle size deviation may be measured through dynamic light scattering (DLS) at a temperature of 25°C and a measurement angle of 175°. Here, the value of the peak derived through the polydispersity index (PdI) in the confidence interval of 0.5 is taken as the particle size.

In addition, the biodegradable polyester resin may comprise the cellulose-based additive in an amount of 3,000 ppm or less. For example, the content of the cellulose-based additive may be 2,500 ppm or less, 2,000 ppm or less, 1,200 ppm or less, 900 ppm or less, 800 ppm or less, or 650 ppm or less, or 100 ppm to 3,000 ppm, 150 ppm to 2,200 ppm, 180 ppm to 1,000 ppm, 350 ppm to 850 ppm, 400 ppm to 700 ppm, or 520 ppm to 650 ppm, based on the total weight of the biodegradable polyester resin.

In addition, the cellulose-based additive may be pretreated with bead mill pretreatment, ultrasonic pretreatment, agitation pretreatment, or hydrophobic pretreatment. Specifically, the cellulose-based additive may be obtained by subjecting a cellulose-based additive dispersed in water to bead mill pretreatment, ultrasonic pretreatment, agitation pretreatment, or hydrophobic pretreatment.

First, the bead mill pretreatment may be carried out with a wet milling apparatus such as a vertical mill or a horizontal mill. A horizontal mill may be preferable in that the amount of beads that can be charged inside the chamber is greater, the machine's uneven wear is smaller, the wear of beads is smaller, and the maintenance and repair are convenient, but it is not limited thereto.

The bead mill pretreatment may be carried out using one or more beads selected from the group consisting of zirconium, zircon, zirconia, quartz, and aluminum oxide.

Specifically, the bead mill pretreatment may be carried out using beads having a diameter of 0.3 mm to 1 mm. For example, the diameter of beads may be 0.3 mm to 1 mm, 0.35 mm to 0.95 mm, 0.4 mm to 0.9 mm, 0.45 mm to 0.7 mm, 0.45 mm to 0.85 mm, or 0.45 mm to 0.6 mm. As the diameter of beads satisfies the above range, it is possible to further enhance the dispersibility of the cellulose-based additive. If the diameter of beads exceeds the above range, the average particle size and particle size deviation of the cellulose-based additive may increase, which may reduce the dispersibility.

In addition, it may be preferable from the viewpoint of the transfer of sufficient energy that the bead mill pretreatment is carried out with beads having a specific gravity greater than that of the cellulose-based additive. For example, the beads may be one or more selected from the group consisting of zirconium, zircon, zirconia, quartz, and aluminum oxide, which have a specific gravity greater than that of the cellulose-based additive dispersed in water. Zirconium beads having a specific gravity greater than that of the cellulose-based additive dispersed in water by 4 times or more may be preferred, but they are not limited thereto.

The bead mill pretreatment may be carried out by filling beads in 80% or more of a chamber at a linear speed of 20 m/sec or less. For example, the bead mill pretreatment may be carried out at a bead filling rate of 80% or more, 81% or more, or 83% or more in a chamber and a linear speed of 17 m/sec or less, 18 m/sec or less, or 16 m/sec or less. As the filling rate and the linear speed satisfy the above ranges, the effect of the bead mill pretreatment, that is, the enhancement in dispersibility can be maximized.

In addition, the ultrasonic pretreatment is a method of physically crushing or pulverizing nanoparticles with waves generated by emitting ultrasonic waves of 20 kHz into a solution.

Specifically, the ultrasonic pretreatment may be carried out for less than 30 minutes with an energy dose of 30,000 J or less. For example, the ultrasonic pretreatment may be carried out for less than 30 minutes, 23 minutes or less, 20 minutes or less, 13 minutes or less, 10 minutes or less, 6 minutes or less, or 3 minutes or less, with an energy dose of 30,000 J or less, 26,000 J or less, 24,500 J or less, 22,000 J or less, 19,500 J or less, 16,500 J or less, or 16,000 J or less. As the energy dose and the operation time of the ultrasonic pretreatment satisfy the above ranges, the effect of the ultrasonic pretreatment, that is, the enhancement in dispersibility can be maximized.

According to an embodiment, the cellulose-based additive may be pretreated with a bead mill or pretreated with ultrasound. Alternatively, the cellulose-based additive may be pretreated with both a bead mill and ultrasonic waves. In such an event, it may be preferable that ultrasonic pretreatment is carried out after the bead mill pretreatment to prevent re-aggregation, thereby enhancing the dispersibility.

If the cellulose-based additive, specifically, the cellulose-based additive dispersed in water is pretreated with a bead mill or pretreated with ultrasound, the dispersibility can be maximized, whereby the number of cellulose particles can be increased. Specifically, the number of cellulose particles of a cellulose-based additive dispersed in water and further pretreated with a bead mill or ultrasonic waves may be greater than that of cellulose particles of a cellulose-based additive dispersed in water without pretreatment with a bead mill or ultrasonic waves, based on the same content. Thus, if the cellulose-based additive is further pretreated with a bead mill or ultrasound, the dispersion stability may be further enhanced.

In addition, the agitation pretreatment may be carried out for 1 minute to 90 minutes at 10,000 rpm or less. For example, the agitation pretreatment may be carried out using an agitator or a homogenizer and may be carried out for 10 minutes to 90 minutes, 30 minutes to 85 minutes, 45 minutes to 70 minutes, or 50 minutes to 65 minutes at 9,500 rpm or less, 6,500 rpm or less, 5,000 rpm or less, 3,500 rpm or less, 2,500 rpm or less, 2,200 rpm or less, or 2,000 rpm or less.

In addition, the hydrophobic pretreatment may be carried out by at least one method selected from the group consisting of acetylation, silanization, crosslinking, fluorination, addition of an alkyl ketene dimer (AKD), and addition of an alkyl succinic anhydride (ASA).

Specifically, as some of the hydroxyl groups of the cellulose-based additive are substituted with hydrophobic groups having a low affinity with water through the hydrophobic pretreatment method, dimensional stability can be further enhanced. For example, the silanization may be carried out by using methyltrimethoxysilane (MTMS), tetramethoxysilane (TMOS), dimethoxydimethylsilane (DMDMS), 3-methyl-acryl-oxypropyl trimethoxy silane (MAPTMS), titanium butoxide (TBOT), or trimethoxyphenyl-silane (TMPS), but it is not limited thereto.

According to an embodiment, the biodegradable polyester resin may comprise at least one inorganic filler selected from the group consisting of titanium dioxide ($TiO_2$), silicon dioxide ($SiO_2$), calcium carbonate ($CaCO_3$), talc, aluminum oxide ($Al_2O_3$), calcium oxide (CaO), and potassium oxide ($K_2O$).

The inorganic filler may have an average particle diameter (D50) of 100 $\mu$m or less in a particle size distribution (PSD) as measured by a particle size analyzer Microtrac S3500. For example, the inorganic filler may have an average particle diameter (D50) of 85 $\mu$m or less, 70 $\mu$m or less, 50 $\mu$m or less, 25 $\mu$m or less, 10 $\mu$m or less, 5 $\mu$m or less, 3 $\mu$m or less, or 1 $\mu$m or less, in a particle size distribution (PSD) as measured by a particle size analyzer Microtrac S3500.

In addition, the inorganic filler may have a specific surface area of 100 $m^2$/g or more. For example, the specific surface area of the inorganic filler may be 100 $m^2$/g or more, 105 $m^2$/g or more, or 110 $m^2$/g or more.

As an inorganic filler satisfying the average particle diameter (D50) and specific surface area is employed, crystallinity, thermal stability, and mechanical properties such as tensile strength, and dimensional stability can be further enhanced.

The specific surface area may be measured using a BET specific surface area analyzer (Brunauer Emmett Teller; BET). For example, the specific surface area of the inorganic filler may be measured with ASAP 2020 (manufacturer: Micromeritics).

Specifically, the biodegradable polyester resin may comprise an inorganic filler in an amount of 5,000 ppm or less based on the total weight of the biodegradable polyester resin. For example, the content of the inorganic filler may be 5,000 ppm or less, 3,500 ppm or less, or 2,000 ppm or less, or 10 ppm to 5,000 ppm, 15 ppm to 4,000 ppm, 25 ppm to 3,500 ppm, 35 ppm to 2,500 ppm, 50 ppm to 2,000 ppm, 50 ppm to 5,000 ppm, 500 ppm to 5,000 ppm, 1,500 ppm to 5,000 ppm, or 2,000 ppm to 5,000 ppm, based on the total weight of the biodegradable polyester resin.

As the biodegradable polyester resin comprises the inorganic filler in a content within the above range, the heat shrinkage rate may be controlled within an appropriate range without deteriorating biodegradability.

In addition, the biodegradable resin composition may further comprise at least one resin selected from the group consisting of polylactic acid (PLA), polybutylene adipate terephthalate (PBAT), polybutylene succinate (PBS), polybutylene succinate terephthalate (PBST), polybutylene succinate adipate (PBSA), polybutylene adipate (PBA), and polycaprolactone (PCL). As the biodegradable polyester resin further comprises the resin, it may be more advantageous for controlling characteristics such as mechanical properties.

In addition, the biodegradable polyester resin may have a number of carboxyl end groups of 50 eq/ton or less. For example, the number of carboxyl end groups of the biodegradable polyester resin may be 50 eq/ton or less, 48 eq/ton or less, 45 eq/ton or less, 42 eq/ton or less, or 35 eq/ton or less. As the number of carboxyl end groups is adjusted within the above range, it is possible to reduce the incidence of polymer deterioration in the process of manufacturing a molded article such as a film from the biodegradable polyester resin, while enhancing all of the mechanical properties such as tensile strength and thermal resistance.

In addition, the biodegradable polyester resin may have an intrinsic viscosity (IV) of 1.1 dl/g or more. For example, the intrinsic viscosity (IV) of the biodegradable polyester resin may be 1.15 dl/g or more, 1.23 dl/g or more, 1.3 dl/g or more, 1.4 dl/g or more, 1.45 dl/g or more, 1.5 dl/g or more, 1.55 dl/g or more, or 1.62 dl/g or more.

**Process for preparing a biodegradable polyester resin**

The process for preparing a biodegradable polyester resin according to another embodiment comprises mixing a diol and an aromatic dicarboxylic acid and pretreating the mixture to obtain a slurry; subjecting the slurry to a first esterification reaction, adding an aliphatic dicarboxylic acid or a diol and an aliphatic dicarboxylic acid to the resultant, and subjecting them to a second esterification reaction to obtain a prepolymer; and subjecting the prepolymer to a polycondensation reaction to obtain a polymer, wherein the biodegradable polyester resin comprises a diol residue, an aromatic dicarboxylic acid residue, and an aliphatic dicarboxylic acid residue, and the biodegradable polyester resin has peaks at a diffraction angle (2Θ) of $17.3 \pm 0.3°$, $20.4 \pm 0.3°$, $23.3 \pm 0.3°$, and $25.0 \pm 0.3°$ in an X-ray diffraction spectrum (XRD), and the biodegradable polyester resin has a crystal size of 50 Å to 80 Å according to the above Equation 1.

First, a diol and an aromatic dicarboxylic acid are mixed and pretreated to obtain a slurry.

The diol may comprise 1,4-butanediol, 1,2-ethanediol, 1,3-propanediol, or a derivative thereof as a diol component. Specifically, the diol component may comprise 1,4-butanediol, 1,2-ethanediol, or a derivative thereof. It may comprise 1,4-butanediol or a derivative thereof. If the diol comprises 1,4-butanediol as a diol component, especially, if the diol is composed of 1,4-butanediol alone, it may be more advantageous for enhancing biodegradability, mechanical properties such as tensile strength, and thermal resistance. In addition, the diol may comprise a biomass-based diol component.

For example, the diol may comprise 1,4-butanediol, 1,2-ethanediol, 1,3-propanediol, or a derivative thereof as a diol component in an amount of 95% by mole or more. For example, the diol may comprise 1,4-butanediol, 1,2-ethanediol, 1,3-propanediol, or a derivative thereof in an amount of 97% by mole or more, 98% by mole or more, 99% by mole or more, or 100% by mole, based on the total number of moles of the diol component.

In addition, the dicarboxylic acid may comprise an aromatic dicarboxylic acid and an aliphatic dicarboxylic acid as a dicarboxylic acid component. Specifically, the aromatic dicarboxylic acid may comprise terephthalic acid, dimethyl terephthalate, or a derivative thereof, and the aliphatic dicarboxylic acid may comprise adipic acid, succinic acid, sebacic acid, or a derivative thereof.

The dicarboxylic acid may comprise an aromatic dicarboxylic acid in an amount of 30% by mole or more based on the total number of moles of the dicarboxylic acid component. For example, the content of the aromatic dicarboxylic acid may be 32% by mole or more, 36% by mole or more, 42% by mole or more, or 46% by mole or more, or 30% by mole to 65% by mole, 33% by mole to 62% by mole, 35% by mole to 60% by mole, 38% by mole to 52% by mole, or 42% by mole to 50% by mole, based on the total number of moles of the dicarboxylic acid component.

The dicarboxylic acid may comprise an aliphatic dicarboxylic acid in an amount of 35% by mole or more based on the total number of moles of the dicarboxylic acid component. For example, the content of the aliphatic dicarboxylic acid may be 38% by mole or more, 45% by mole or more, 52% by mole or more, or 54% by mole or more, or 35% by mole to 70% by mole, 38% by mole to 67% by mole, 40% by mole to 65% by mole, 48% by mole to 62% by mole, or 50% by mole to 58% by mole, based on the total number of moles of the dicarboxylic acid component.

In addition, the diol may be added in the pretreatment at a ratio of 1.15 to 1.8, 1.15 to 1.6, or 1.2 to 1.5, relative to the aromatic dicarboxylic acid.

As the contents of the aromatic dicarboxylic acid and the aliphatic dicarboxylic acid are adjusted to the above ranges, in particular, as the content of the aliphatic dicarboxylic acid is adjusted to the above range, crystallinity and thermal stability are secured to induce sufficient orientation crystals by virtue of a sufficient crystallization speed, and biodegradability and dimensional stability can be further enhanced.

According to an embodiment, as a diol and an aromatic dicarboxylic acid are mixed and pretreated to form a slurry, the diol component and the aromatic dicarboxylic acid can be uniformly reacted, and it is effective for expediting the esterification reaction, whereby the reaction efficiency can be increased.

In particular, if an aromatic dicarboxylic acid has complete crystallinity and is in a powder form as in terephthalic acid, its solubility in the diol is very low, whereby it may be difficult to carry out a homogeneous reaction. Thus, the pretreatment step of forming a slurry may play a very important role in enhancing the reaction efficiency of the biodegradable polyester resin having excellent physical properties according to an embodiment of the present invention.

In addition, as the pretreatment is carried out, it is possible to prevent the diol from being subjected to esterification with the aliphatic dicarboxylic acid in advance, it may be easier to control the numbers and ratio of the first repeat unit and the second repeat unit.

Meanwhile, in the pretreatment, the structure and physical properties of the biodegradable polyester resin may vary depending on the particle size, standard deviation thereof, particle size distribution, pretreatment reaction conditions, and the like of the aromatic dicarboxylic acid; thus, it is very important to control them.

According to an embodiment, the aromatic dicarboxylic acid may comprise terephthalic acid. Details on the average particle diameter (D50) of terephthalic acid and the standard deviation thereof are as described above.

Specifically, as terephthalic acid having an average particle diameter (D50) of 15 μm to 400 μm and a standard deviation of 100 or less, along with the diol, is pretreated, a slurry without phase separation can be prepared, and crystallinity and thermal stability can be further enhanced.

According to another embodiment, the aromatic dicarboxylic acid may comprise dimethyl terephthalate. Unlike terephthalic acid, the melting point of dimethyl terephthalate is about 142°C; thus, it may be more preferable in terms of esterification reaction rate and reaction efficiency to convert dimethyl terephthalate into a molten state at 170°C and then mix it with the diol.

The pretreatment may be carried out by feeding the diol and the aromatic dicarboxylic acid into a slurry agitator (tank). Since it is very important to control the stirring force until the mixture of the diol and the aromatic dicarboxylic acid is formed into a slurry in the pretreatment, the number and shape of the agitating blades of the agitator, and process conditions such as pretreatment temperature and agitating speed are very important.

Specifically, the slurry agitator may be an anchor type at the bottom. More specifically, it may have a height to the agitator of 20 mm or more and two or more rotor blades. When the slurry agitator has such a structure, the slurry conversion efficiency can be further enhanced.

For example, the slurry agitator may have a height to the agitator of 20 mm or more. That is, the reactor and the bottom of the agitator are almost contiguous to each other. In such a case, the efficiency of forming a slurry can be further enhanced in that a slurry without precipitation can be obtained. If the shape of the slurry agitator does not satisfy the above conditions, when the diol and the aromatic dicarboxylic acid are initially mixed, the aromatic dicarboxylic acid may settle to the bottom, thereby causing phase separation.

In addition, the pretreatment may be carried out by agitating a mixture of the diol and the aromatic dicarboxylic acid at 25°C to 100°C and 50 rpm to 500 rpm for 10 minutes or longer. For example, the pretreatment may be carried out at a temperature of 25°C to 85°C, 28°C to 60°C, 30°C to 55°C, or 26°C to 50°C, an agitation speed of 65 rpm to 400 rpm, 70 rpm to 320 rpm, 80 rpm to 300 rpm, 95 rpm to 260 rpm, 100 rpm to 200 rpm, or 120 rpm to 180 rpm, for 10 minutes or longer, 15 minutes or longer, 25 minutes or longer, 30 minutes or longer, 10 minutes to 200 minutes, 15 minutes to 160 minutes, 20 minutes to 120 minutes, 22 minutes to 100 minutes, or 26 minutes to 65 minutes.

As the temperature, agitating speed, and time of the pretreatment step satisfy the above ranges, a homogeneous slurry can be more efficiently obtained without phase separation, and it may be more preferable in terms of esterification reaction rate and reaction efficiency.

Thereafter, the slurry is subjected to a first esterification reaction, and an aliphatic dicarboxylic acid or a diol and an aliphatic dicarboxylic acid are added to the resultant, which is then subjected to a second esterification reaction to obtain a prepolymer.

Specifically, the slurry is charged into a reactor and subjected to a first esterification reaction, and an aliphatic dicarboxylic acid or a diol and an aliphatic dicarboxylic acid are added to the resultant, which is then subjected to a second esterification reaction to obtain a prepolymer.

As the prepolymer is prepared by a two-step esterification reaction through a first esterification reaction and a second esterification reaction, reaction stability and reaction uniformity can be enhanced as compared with the case where a one-step esterification reaction is carried out, and the numbers and ratio of the first repeat unit and the second repeat unit can be more readily controlled.

The first esterification reaction may be carried out at 190°C to 260°C, 200°C to 245°C, 205°C to 235°C, or 215°C to 225°C, for 1 hour to 4 hours, 1.5 hours to 3.5 hours, or 2.5 hours to 3 hours.

The second esterification reaction may be carried out at 160°C to 240°C, 170°C to 230°C, 185°C to 225°C, or 210°C to 220°C, for 0.5 hour to 3 hours, 1 hour to 2.5 hours, or 1.5 hours to 2.2 hours.

In addition, the diol may be added in the second esterification reaction at a ratio of 1.12 to 1.6 or 1.2 to 1.4, relative to the aliphatic dicarboxylic acid.

According to another embodiment, the process for preparing a biodegradable polyester resin may further comprise adding a cellulose-based additive. Details on the cellulose-based additive are as described above.

Specifically, the cellulose-based additive may be fed to the first esterification reactants or the second esterification reactants. More specifically, the cellulose-based additive may be fed prior to the first esterification reaction, or after the first esterification reaction and prior to the second esterification reaction.

In such an event, when the cellulose-based additive is added prior to the second esterification reaction, as compared with the case where it is added prior to the first esterification reaction, the binding force of nanocellulose can be enhanced, whereby biodegradability, thermal properties, and durability can be further enhanced.

The content of the cellulose-based additive fed may be 3,000 ppm or less based on the total weight of the first esterification reactants or the second esterification reactants. For example, a cellulose-based additive may be further fed in an amount of 3,000 ppm or less, 2,400 ppm or less, 2,300 ppm or less, 2,000 ppm or less, 1,800 ppm or less, 1,500 ppm or less, 1,250 ppm or less, or 1,000 ppm or less, and 100 ppm or more, 130 ppm or more, 190 ppm or more, 230 ppm or more, 260 ppm or more, 300 ppm or more, 330 ppm or more, 380 ppm or more, 420 ppm or more, or 450 ppm or more.

In addition, the cellulose-based additive may be added at a temperature of 20°C to 230°C, 25°C to 220°C, 150°C to 225°C, 185°C to 225°C, or 210°C to 220°C. As the feeding temperature of the cellulose-based additive satisfies the above range, it may be preferable in that mechanical properties such as tensile strength or durability can be enhanced.

Further, the cellulose-based additive may be fed at a rate of 2 kg/minute to 10 kg/minute, 2.5 kg/minute to 9.5 kg/minute, or 3 kg/minute to 8 kg/minute, to prevent aggregation along with enhancement of strength, impact strength, and thermal resistance and to maintain an appropriate process speed. If the feeding rate is less than the above range, an additional process may be required, and the rate may be too low, resulting in low efficiency. If the feeding rate exceeds the above range, re-aggregation may take place, thereby deteriorating tensile strength and thermal resistance.

In addition, a titanium-based catalyst or a germanium-based catalyst may be additionally added prior to the esterification reaction and/or prior to the polycondensation reaction described below.

For example, at least one catalyst selected from the group consisting of titanium isopropoxide, tetrapropyl titanate, tetrabutyl titanate, tetraisopropyl titanate, germanium oxide, germanium methoxide, germanium ethoxide, tetramethyl germanium, tetraethyl germanium, and germanium sulfide may be fed prior to the first and second esterification reactions and/or the polycondensation reaction.

Here, the content of the catalyst fed may be 100 ppm to 1,000 ppm. For example, the content of the catalyst fed may be 100 ppm to 650 ppm, 120 ppm to 500 ppm, or 150 ppm to 350 ppm, based on the total weight of the diol, aromatic dicarboxylic acid, and aliphatic dicarboxylic acid. In addition, in the case where the catalyst is fed to both the esterification reaction and the polycondensation reaction, the total amount of the catalyst fed may be 1,200 ppm or less, 950 ppm or less, or 880 ppm or less.

In addition, an amine-based high-temperature thermal stabilizer such as tetraethylenepentaamine; at least one phosphorus-based stabilizer selected from the group consisting of phosphoric acid, phosphorous acid, polyphosphoric acid, trimethylphosphate, triethylphosphate, triethylphosphonoacetate, trimethylphosphine, and triphenylphosphine; or a branching agent such as glycerol may be fed prior to the esterification reaction and/or prior to the polycondensation reaction described below. For example, the stabilizer may be fed prior to the second esterification reaction or prior to the polycondensation reaction, and the branching agent may be fed prior to the first esterification reaction and/or the second esterification reaction.

The content of the stabilizer or branching agent may be 3,000 ppm or less. For example, the content of the phosphorus-based stabilizer or the branching agent may be 10 ppm to 3,000 ppm, 20 ppm to 2,000 ppm, 25 ppm to 1,500 ppm, or 30 ppm to 1,000 ppm, based on the total weight of the diol, aromatic dicarboxylic acid, and aliphatic dicarboxylic acid. As the content of the phosphorus-based stabilizer satisfies the above range, it may be advantageous in that the degradation of the polymer due to high temperatures during the reaction process can be suppressed, thereby reducing the end groups of the polymer, or color can be improved.

In addition, at least one selected from the group consisting of an additive such as silica, potassium, and magnesium and a color-correcting agent such as cobalt acetate may be further fed prior to the polycondensation reaction. Specifically, the additive and/or color-correcting agent may be added after the completion of the esterification reaction and then stabilized, and the polycondensation reaction may then be carried out. The prepolymer may have a number average molecular weight of 800 to 30,000 g/mole. For example, the number average molecular weight of the prepolymer may be 850 g/mole to 20,000 g/mole, 880 g/mole to 18,000 g/mole, 900 g/mole to 10,000 g/mole, 920 g/mole to 8,000 g/mole, 940 g/mole to 4,500 g/mole, or 960 g/mole to 2,000 g/mole.

The number average molecular weight may be measured using gel permeation chromatography (GPC). Specifically, various data such as Mn, Mw, and Mp may be obtained by gel permeation chromatography. The molecular weight may be measured as a number average molecular weight (Mn) among them.

Thereafter, the prepolymer is subjected to a polycondensation reaction to obtain a polymer.

Specifically, the polycondensation reaction may be carried out in two steps. For example, the prepolymer may be subjected to a first polycondensation reaction, which may then be fed to a disc ring-type reactor and subjected to a second polycondensation reaction to obtain a polymer. In such an event, the second polycondensation may be carried out while 1,4-butanediol vapor and by-products are removed.

The first polycondensation reaction may be carried out at a temperature of 255°C or lower, 250°C or lower, 245°C or lower, 240°C or lower, 215°C to 255°C, 225°C to 245°C, or 230°C to 242°C, a pressure of 1 Torr to 100 Torr, 2 Torr to 65 Torr, 5 Torr to 40 Torr, 7 Torr to 25 Torr, or 8 Torr to 15 Torr, for 0.5 hour to 3 hours, 1 hour to 2.5 hours, or 1.5 hours to 2 hours.

In addition, the second polycondensation reaction may be carried out at a temperature of 210°C to 250°C, 215°C to 245°C, or 225°C to 240°C, while the pressure is reduced to 1 Torr or lower, 0.8 Torr or lower, or 0.5 Torr or lower, for 0.5 hour or longer, 0.8 hour or longer, or 1 hour or longer.

As the temperature, pressure, and time conditions of the first polycondensation and the second polycondensation each satisfy the above ranges, mechanical properties and thermal resistance can be enhanced.

According to another embodiment, the process for preparing a biodegradable polyester resin may further comprise adding an inorganic filler slurry prior to the polycondensation reaction.

Specifically, the inorganic filler slurry may be fed to the first polycondensation reactants or the second polycondensation reactants. More specifically, the inorganic filler may be fed prior to the first polycondensation reaction, or after the first polycondensation reaction and prior to the second polycondensation reaction.

Here, the content of the inorganic filler fed may be 10,000 ppm or less based on the total weight of the reactant subjected to the polycondensation reaction. For example, the content of the inorganic filler fed may be 8,500 ppm or less, 7,000 ppm or less, 6,000 ppm or less, 3,500 ppm or less, or 2,500 ppm or less, or 100 ppm to 10,000 ppm, 500 ppm to 8,000 ppm, 800 ppm to 5,500 ppm, or 1,500 ppm to 3,000 ppm, based on the total weight of the reactant subjected to the polycondensation reaction.

The inorganic filler slurry may be a slurry containing the inorganic filler. Specifically, the inorganic filler slurry is a mixture of the diol component and the inorganic filler. More specifically, the inorganic filler slurry refers to a slurry form in which an inorganic filler is dispersed in the diol component. Details on the inorganic filler are as described above.

The content of the inorganic filler may be 3% by weight to 30% by weight based on the total weight of the inorganic filler slurry. For example, the content of the inorganic filler may be 5% by weight to 28% by weight, 7% by weight to 23% by weight, 9% by weight to 16% by weight, or 9.5% by weight to 12% by weight, based on the total weight of the inorganic filler slurry.

The polymer may have a number average molecular weight of 40,000 g/mole or more. For example, the number average molecular weight of the polymer may be 43,000 g/mole or more, 48,000 g/mole or more, or 55,000 g/mole or more, or 40,000 g/mole to 70,000 g/mole, 42,000 g/mole to 65,000 g/mole, 45,000 g/mole to 58,000 g/mole, or 48,000 g/mole to 55,000 g/mole. As the number average molecular weight of the polymer satisfies the above range, mechanical properties, processability, and productivity can be further enhanced.

According to another embodiment, biodegradable polyester resin pellets may be prepared from the polymer.

Specifically, the polymer may be cooled to 70°C or lower, 50°C or lower, 45°C or lower, or 25°C or lower, and the cooled polymer may then be subjected to underwater cutting or strand cutting to prepare pellets.

The cutting step may be carried out using a pellet cutter without limitations as long as it is commonly used in the art, and the pellets may have various shapes.

## Molded article

An embodiment may provide an article molded from the biodegradable polyester resin.

Specifically, the molded article may be prepared by molding a composition comprising the biodegradable polyester resin by a method known in the art such as extrusion and stretching, extrusion and blowing, injection, or the like, and the molded article may be an injection molded article, an extrusion molded article, a thin film molded article, or a blow molded article, but it is not limited thereto.

For example, the molded article may be in the form of a film or sheet that can be used as agricultural mulching films, disposable gloves, disposable films, disposable bags, food packaging materials, or garbage bags, in the form of a fiber that can be used as fabrics, knitted fabrics, nonwoven fabrics, or ropes, or in the form of a container that can be used as a container for food packaging such as lunch boxes. In addition, the molded article may be a molded article of various types such as disposable straws, spoons, food plates, and forks.

Further, the biodegradable polyester resin can be applied to various fields that require thermal resistance, mechanical properties, dimensional stability, and moldability, such as packaging materials such as disposable bags and food containers, and automobile interior parts, so that they would exhibit excellent characteristics.

## Biodegradable polyester film

The biodegradable polyester film according to another embodiment comprises a biodegradable polyester resin, wherein the biodegradable polyester resin comprises a diol residue, an aromatic dicarboxylic acid residue, and an aliphatic dicarboxylic acid residue, the biodegradable polyester resin has peaks at a diffraction angle (2Θ) of $17.3 \pm 0.3°$, $20.4 \pm 0.3°$, $23.3 \pm 0.3°$, and $25.0 \pm 0.3°$ in an X-ray diffraction spectrum (XRD), and the biodegradable polyester resin has a crystal size of 50 Å to 80 Å according to the above Equation 1.

Details on the biodegradable polyester resin are as described above.

Specifically, as the biodegradable polyester film comprises the biodegradable polyester resin, more specifically, as it is prepared using the biodegradable polyester resin, it has excellent mechanical properties, dimensional stability, and moldability.

The biodegradable polyester film may have a tensile strength of 30 MPa or more. For example, the tensile strength of the biodegradable polyester film may be 30 MPa or more, 32 MPa or more, 33 MPa or more, or 35 MPa or more, and 70 MPa or less, 65 MPa or less, 55 MPa or less, 45 MPa or less, or 43 MPa or less. The tensile strength may be the tensile strength of the biodegradable polyester film prepared at an elongation of 300% or 800%.

In addition, the biodegradable polyester film may have a heat shrinkage rate of 50% or less in the main shrinkage direction upon thermal treatment at a temperature of 50°C for 5 minutes. For example, the biodegradable polyester film may have a heat shrinkage rate of 50% or less, 45% or less, 42% or less, 40% or less, 33% or less, 28% or less, 25% or less, or 20% or less, in the main shrinkage direction upon thermal treatment at a temperature of 50°C for 5 minutes. The heat shrinkage rate may be the heat shrinkage rate of the biodegradable polyester film prepared at an elongation of 300% or 800%.

As the tensile strength and heat shrinkage rate each satisfy the above ranges, the biodegradable polyester film has excellent thermal stability and dimensional stability, so that it can exhibit excellent characteristics even when applied as a packaging material for products that require thermal resistance.

The main shrinkage direction may be the longitudinal direction (MD) or the transverse direction (TD). Specifically, the main shrinkage direction may be the longitudinal direction (MD).

In addition, the biodegradable polyester film may have a peak at a diffraction angle (2Θ) of $18.0 \pm 0.3°$ in an X-ray diffraction (XRD) spectrum. As the biodegradable polyester film has a peak at a diffraction angle (2Θ) of $18.0 \pm 0.3°$ in an X-ray diffraction (XRD) spectrum, when a heavy object is applied to a molded article using the film, it is hardly broken during the additional stretching. Accordingly, the biodegradable polyester film can be applied to various fields that require thermal resistance, mechanical properties, dimensional stability, and moldability, such as packaging materials such as disposable bags and food containers, and automobile interior parts, so that they would have excellent stability.

In addition, the biodegradable polyester film may further satisfy the following Equation 2.

[Equation 2]

$$|Hmc_1 - Hmc_2| \geq 0.1$$

In Equation 2, $Hmc_1$ is the heat of crystal fusion (J/g) of the biodegradable polyester resin measured by differential scanning calorimetry, and $Hmc_2$ is the heat of crystal fusion (J/g) measured by differential scanning calorimetry for the biodegradable polyester film prepared at an elongation of 800%.

Details on the heat of crystal fusion and its measurement method are as described above. For example, $Hmc_2$ may be measured by differential scanning calorimetry for the biodegradable polyester film (3 mg) prepared at an elongation of 800%.

For example, the value according to Relationship 2 may be 0.1 or more, 0.15 or more, 0.2 or more, 0.23 or more, or 0.3 or more. As the value according to Relationship 2 satisfies the above range, the biodegradable polyester film may have excellent thermal stability and dimensional stability.

In addition, the biodegradable polyester film may have a thickness of 5 μm to 200 μm. For example, the thickness of the biodegradable polyester film may be 5 μm to 160 μm, 6 μm to 130 μm, 8 μm to 115 μm, 10 μm to 100 μm, 12 μm to 90 μm, or 13 μm to 85 μm.

The biodegradable polyester film may have a biodegradability of 90% or more. For example, the biodegradability of the biodegradable polyester film may be 91% or more, 92% or more, 93% or more, 94% or more, or 95% or more.

**Process for preparing a biodegradable polyester film**

The process for preparing a biodegradable polyester film according to another embodiment may comprise preparing a sheet from biodegradable polyester resin pellets.

Details on the biodegradable polyester resin pellets are as described above.

Specifically, a hot press may be used to prepare a sheet.

For example, two Teflon sheets are prepared. A stainless steel (SUS) frame (area of 12 cm × 12 cm) is placed on one Teflon sheet, and the biodegradable polyester resin pellets are put in the stainless steel (SUS) frame, which is covered with another Teflon sheet. Thereafter, the hot press is maintained for 3 minutes at a temperature of 200°C and a pressure of 10 MPa. After the frame is detached, the molded body is immediately immersed in water at 20°C and cooled for 30 seconds to prepare a biodegradable polyester sheet.

The biodegradable polyester sheet may have a thickness of 5 μm to 500 μm. For example, the thickness of the biodegradable polyester sheet may be 5 μm to 500 μm, 15 μm to 450 μm, 30 μm to 380 μm, 50 μm to 350 μm, 55 μm to 400 μm, 60 μm to 300 μm, 70 μm to 420 μm, 85 μm to 360 μm, or 100 μm to 330 μm.

Thereafter, the biodegradable polyester sheet is stretched to prepare a biodegradable polyester film.

Specifically, the stretching may be carried out as uniaxial stretching in a first direction or a second direction perpendicular to the first direction, biaxial stretching in a first direction and a second direction perpendicular to the first direction, or simultaneous biaxial stretching.

In this specification, the first direction may be the transverse direction (TD) or the longitudinal direction (MD). Specifically, the first direction may be the longitudinal direction (MD), and the second direction perpendicular to the first direction may be the transverse direction (TD).

In addition, the biodegradable polyester sheet may be stretched at a stretching rate of 100% to 900% (1 to 9 times) in a first direction and at a stretching rate of 100% to 900% (1 to 9 times) in a second direction perpendicular to the first direction to prepare a biodegradable polyester film. Alternatively, the biodegradable polyester sheet may be stretched at a stretching rate of 100% to 900% (1 to 9 times) in a first direction to prepare a biodegradable polyester film.

For example, the stretching rate may be 110% to 900%, 150% to 880%, 220% to 850%, 260% to 830%, 300% to 800%, 110% to 650%, 200% to 350%, 250% to 320%, 600% to 900%, 720% to 860%, or 780% to 820%.

In addition, the stretching may be carried out at 45°C or higher. For example, the stretching temperature may be 48°C or higher, 50°C or higher, or 60°C or higher.

The process for preparing a biodegradable polyester film according to another embodiment may comprise drying and melt-extruding biodegradable polyester resin pellets.

Details on the biodegradable polyester resin pellets are as described above.

The drying may be carried out at 60°C to 100°C for 2 hours to 12 hours. Specifically, the drying may be carried out at 62°C to 80°C, 63°C to 75°C, or 65°C to 70°C, for 3 hours to 10 hours or 4 hours to 7 hours. As the drying process conditions of pellets satisfy the above ranges, it is possible to further enhance the quality of a biodegradable polyester film thus produced.

The melt-extrusion may be carried out at 140°C or higher. For example, the melt-extrusion may be carried out at 155°C or higher, 170°C or higher, 190°C or higher, or 210°C or higher.

Specifically, the melt-extrusion may be carried out by a blown film process.

## Mode for the Invention

Hereinafter, the present invention will be described in more detail with reference to the following examples. But the following Examples are intended to illustrate the present invention, and the scope of the Examples is not limited thereto only.

**[Example]**

**Preparation of biodegradable polyester resin pellets**

**Example 1-1**

(1) Pretreatment of a mixture of a diol and an aromatic dicarboxylic acid

46% by mole of 1,4-butanediol (1,4-BDO) as a diol component and 46% by mole of terephthalic acid (TPA) as an aromatic dicarboxylic acid were charged at a ratio of diol to dicarboxylic acid of 1.4 to a slurry tank (provided with an anchor type at the bottom, a height to the agitator of 30 mm, and three rotor blades), which was agitated at 40°C and 150 rpm for 30 minutes to prepare a slurry without phase separation.

Here, terephthalic acid (TPA) had an average particle diameter (D50) of 130 $\mu$m and a standard deviation (SD) of the average particle diameter (D50) of 25.

(2) Preparation of a prepolymer

The slurry prepared in step (1) was fed to a reactor through a supply line, and 160 ppm of tetrabutyl titanate (product name: Tyzor, manufacturer: Dupont) as a titanium-based catalyst was added thereto. A first esterification reaction was then carried out when the temperature was raised to 220°C for about 2.5 hours until 95% of water as a by-product was discharged.

Thereafter, 54% by mole of 1,4-butanediol (1,4-BDO) and 54% by mole of adipic acid (AA) were added at a ratio of diol to dicarboxylic acid of 1.2 to the reaction product of the first esterification reaction. 200 ppm of tetrabutyl titanate (product name: Tyzor, manufacturer: Dupont) as a titanium-based catalyst was further added thereto. The mixture was then subjected to a second esterification reaction at 210°C for 2 hours until 95% of water as a by-product was discharged, to thereby prepare a prepolymer having a number average molecular weight of 1,000 g/mole.

(3) Preparation of a prepolymer

100 ppm of triethyl phosphate as a thermal stabilizer and 300 ppm of tetrabutyl titanate (product name: Tyzor, manufacturer: Dupont) as a titanium-based catalyst were added to the prepolymer prepared in step (2), which was stabilized for 10 minutes and subjected to a first polycondensation reaction at 240°C and 10 Torr for 2 hours.

Thereafter, the first polycondensation reaction product was charged to a disc ring-type reactor and subjected to a second polycondensation reaction at 240°C for 3 hours with depressurization to 0.5 Torr, to thereby obtain a polymer having a number average molecular weight of 50,000 g/mole. In such an event, the second polycondensation was carried out while 1,4-butanediol vapor and by-products were removed.

Thereafter, the polymer was immersed in water and cut using an underwater cutter to prepare biodegradable polyester resin pellets.

### Example 1-2

Biodegradable polyester resin pellets were prepared in the same manner as in Example 1-1, except that, in step (2), 640 ppm of cellulose nanocrystals (CNC with a terminal group of -$SO_3Na$, average particle size: 160 nm, particle size deviation: 25%, manufacturer: Celluforce) as a cellulose-based additive was added to the first esterification reaction product.

### Example 1-3

Biodegradable polyester resin pellets were prepared in the same manner as in Example 1-1, except that, in step (3), 5,000 ppm of an inorganic filler slurry was further added to the prepolymer. Here, the inorganic filler slurry was fed within 10 minutes through a 500-mesh filter pipe by setting the amount fed to the reactor.

The inorganic filler slurry was prepared by mixing 90% by weight of 1,4-butanediol (1,4-BDO) and 10% by weight of titanium dioxide (manufacturer: Dongwoo TMC, particle size ($D_{50}$): 0.5 $\mu$m, specific surface area: 110 $m^2/g$).

### Example 1-4

Biodegradable polyester resin pellets were prepared in the same manner as in Example 1-1, except that, in step (1), terephthalic acid (TPA) having an average particle diameter (D50) of 150 $\mu$m and a standard deviation of the average particle diameter (D50) of 30 was used.

### Example 1-5

Biodegradable polyester resin pellets were prepared in the same manner as in Example 1-3, except that 2,000 ppm of the inorganic filler slurry was used.

### Comparative Example 1-1

(1) Pretreatment of a mixture of a diol and an aromatic dicarboxylic acid

50% by mole of 1,4-butanediol (1,4-BDO) as a diol component and 50% by mole of terephthalic acid (TPA) as an aromatic dicarboxylic acid component were charged at a ratio of diol to dicarboxylic acid of 1.1 to a slurry tank (provided with an anchor type at the bottom, a height to the agitator of 30 mm, and three rotor blades), which was agitated at 60°C and 150 rpm for 30 minutes to prepare a slurry without phase separation.

Here, terephthalic acid (TPA) had an average particle diameter (D50) of 500 $\mu$m and a standard deviation (SD) of the average particle diameter (D50) of 120.

(2) Preparation of a prepolymer

The slurry prepared in step (1) was fed to a reactor through a supply line, and 300 ppm of tetrabutyl titanate (product name: Tyzor, manufacturer: Dupont) as a titanium-based catalyst was added thereto. A first esterification reaction was then carried out when the temperature was raised to 220°C for about 2 hours until 95% of water as a by-product was discharged.

Thereafter, 50% by mole of 1,4-butanediol (1,4-BDO) and 50% by mole of adipic acid (AA) were added at a ratio of diol to dicarboxylic acid of 1.0 to the reaction product of the first esterification reaction. 200 ppm of tetrabutyl titanate (product name: Tyzor, manufacturer: Dupont) as a titanium-based catalyst was further added thereto. The mixture was then subjected to a second esterification reaction at 220°C for 1.5 hours until 95% of water as a by-product was discharged, to thereby prepare a prepolymer having a number average molecular weight of 800 g/mole.

(3) Preparation of a prepolymer

50 ppm of triethyl phosphate as a thermal stabilizer and 300 ppm of tetrabutyl titanate (product name: Tyzor, manufacturer: Dupont) as a titanium-based catalyst were added to the prepolymer prepared in step (2), which was stabilized for 10 minutes and subjected to a first polycondensation reaction at 260°C and 100 Torr for 1 hour.

Thereafter, the first polycondensation reaction product was charged to a disc ring-type reactor and subjected to a second polycondensation reaction at 265°C and 0.5 Torr for 2 hours, to thereby obtain a polymer having a number average molecular weight of 25,000 g/mole. In such an event, the second polycondensation was carried out while 1,4-butanediol vapor and by-products were removed.

Thereafter, the polymer was immersed in water and cut using an underwater cutter to prepare biodegradable polyester resin pellets.

### Comparative Example 1-2

Biodegradable polyester resin pellets were prepared in the same manner as in Comparative Example 1-1, except that a slurry was not prepared through step (1) and that, in step (2), 50% by mole of 1,4-butanediol (1,4-BDO) as a diol component and 50% by mole of terephthalic acid (TPA) as a dicarboxylic acid component were fed at a ratio of diol to dicarboxylic acid of 1.1 to the reactor through a supply line.

### Comparative Example 1-3

Biodegradable polyester resin pellets were prepared in the same manner as in Comparative Example 1-1, except that terephthalic acid (TPA) was used at 39% by mole in step (1) and that adipic acid (AA) was used at 61% by mole in step (2).

### [Test Example]

### Test Example 1-1: Diffraction angle (2θ), full width at half maximum (FWHM), and crystal size

The biodegradable polyester resin pellets prepared in Examples 1-1 to 1-5 and Comparative Examples 1-1 to 1-3 were each measured for the diffraction angle, full width at half maximum, and crystal size using wide-angle X-ray scattering (WAXD) (trade name: Ultima IV, manufacturer: Rigaku).

Specifically, the resin pellets were cut into a sphere having a width of 1.5 cm, and a wavelength was collided with a diffraction angle (2θ) of 10° to 35° to measure the diffracted wavelength at a scan rate of 5°/minute. In such an event, a diffraction angle (2Θ) at which a peak of a diffracted wavelength appeared was measured, and a full width at half maximum (FWHM) at the diffraction angle (2Θ) was calculated.

In addition, the crystal size was calculated according to the following Equation 2.

$$[\text{Equation 1}]$$

$$Crystal\ size\ (\text{Å}) = \frac{0.9\lambda}{\beta \cos \theta}$$

In Equation 1, $\lambda$ is the wavelength (nm) in the X-ray diffraction spectrum (XRD), $\beta$ is the full width at half maximum (FWHM) at the diffraction angle (2Θ), $\theta$ is the half value of the diffraction angle (2Θ), and the X-ray diffraction spectrum (XRD) has been measured at a diffraction angle (2θ) of 10° to 35° at a scan rate of 5°/minute.

### Test Example 1-2: Crystallization temperature and heat of crystal fusion

The biodegradable polyester resin pellets prepared in Examples 1-1 to 1-5 and Comparative Examples 1-1 to 1-3 were each measured for the crystallization temperature and heat of crystal fusion using a differential scanning calorimeter.

Specifically, 3 mg of the pellets was cut into a cylindrical shape (thickness: 0.5 mm, circular diameter: 4 mm) and placed in an aluminum pan. The exothermic peak measured with a differential scanning calorimeter while the temperature was raised from 40°C to 180°C at a rate of 10°C/minute and then cooled to -50°C at a rate of 10°C/minute was the crystallization temperature (Tc). The heat of crystal fusion ($Hmc_1$) was calculated from the integral at the crystallization temperature (Tc).

**EP 4 282 896 A1**

[Table 1]

| | | Ex. 1-1 | Ex. 1-2 | Ex. 1-3 | Ex. 1-4 | Ex. 1-5 |
|---|---|---|---|---|---|---|
| Diol (% by mole) | | 1,4-BDO (46+54) | 1,4-BDO (46+54) | 1,4-BDO (46+54) | 1,4-BDO (46+54) | 1,4-BDO (46+54) |
| Dicarboxylic acid (% by mole) | | TPA (46) AA (54) | TPA (46) AA (54) | TPA (46) AA (54) | TPA (46) AA (54) | TPA (46) AA (54) |
| TPA | D50 ($\mu$m) | 130 | 130 | 130 | 150 | 130 |
| | Std. deviation | 25 | 25 | 25 | 30 | 25 |
| Cellulose-based additive (ppm) | | - | CNC (640) | | | |
| Inorganic filler slurry (ppm) | | - | - | 5,000 | - | 2,000 |
| Pretreatment in step (1) | | ○ | ○ | ○ | ○ | ○ |
| First esterification reaction temp. (°C) | | 220 | 220 | 220 | 220 | 220 |
| Second esterification reaction temp. (°C) | | 210 | 210 | 210 | 210 | 210 |
| First polycondensation | Temp. (°C) | 240 | 240 | 240 | 240 | 240 |
| | Pressure (Torr) | 10 | 10 | 10 | 10 | 10 |
| Second polycondensation | Temp. (°C) | 240 | 240 | 240 | 240 | 240 |
| | Pressure (Torr) | 0.5 | 0.5 | 0.5 | 0.5 | 0.5 |
| Diffraction angle (2$\theta$, °) | | 17.3°, 20.4°, 23.2°, 25.0° | | | | |
| Full width at half maximum (FWHM) | | 0.43 | 0.39 | 0.40 | 0.43 | 0.41 |
| Tc (°C) | | 39.5 | 48.5 | 46.5 | 39.3 | 43.5 |
| Crystal size (Å) | | 71 | 61 | 65 | 71 | 66 |
| $Hmc_1$ (J/g) | | 19.6 | 22.2 | 20.8 | 19.5 | 20.2 |

[Table 2]

| | | C. Ex. 1-1 | C. Ex. 1-2 | C. Ex. 1-3 |
|---|---|---|---|---|
| Diol (% by mole) | | 1,4-BDO (50+50) | 1,4-BDO (50+50) | 1,4-BDO (61+39) |
| Dicarboxylic acid (% by mole) | | TPA (50) AA (50) | TPA (50) AA (50) | TPA (39) AA (61) |
| TPA | D50 ($\mu$m) | 500 | 500 | 500 |
| | Std. deviation | 120 | 120 | 120 |
| Cellulose-based additive (ppm) | | - | - | - |
| Inorganic filler slurry (ppm) | | - | - | - |
| Pretreatment in step (1) | | ○ | × | ○ |
| First esterification reaction temp. (°C) | | 220 | 220 | 220 |
| Second esterification reaction temp. (°C) | | | | |

(continued)

| | | C. Ex. 1-1 | C. Ex. 1-2 | C. Ex. 1-3 |
|---|---|---|---|---|
| First polycondensation | Temp. (°C) | 260 | 260 | 260 |
| | Pressure (Torr) | 100 | 100 | 100 |
| Second polycondensation | Temp. (°C) | 265 | 265 | 265 |
| | Pressure (Torr) | 0.5 | 0.5 | 0.5 |
| Diffraction angle ($2\theta$, °) | | 17.3°, 20.4°, 23.2°, 25.0° | | |
| Full width at half maximum (FWHM) | | 0.46 | 0.45 | 0.51 |
| Tc (°C) | | 39.2 | 39.3 | 29.5 |
| Crystal size (Å) | | 82 | 84 | 48 |
| $Hmc_1$ (J/g) | | 18.9 | 18.7 | 16.4 |

As can be seen from Tables 1 and 2, the biodegradable polyester resin pellets of Examples 1-1 to 1-5 had peaks at specific diffraction angles as compared with the resin pellets of Comparative Examples 1-1 to 1-3, while their crystal sizes according to Equation 1 satisfied a specific range, resulting in excellent heat of crystal fusion.

Specifically, the biodegradable polyester resin pellets of Examples 1-1 to 1-5 were prepared by pretreating a mixture of a diol and an aromatic dicarboxylic acid and carrying out first and second esterification reactions under specific conditions; in particular, they were prepared from an aromatic dicarboxylic acid having a specific average particle diameter (D50) and a specific standard deviation thereof. Thus, their crystallinity was controlled, resulting in excellent crystal size and heat of crystal fusion.

**Preparation of a biodegradable polyester film**

**Example 2-1**

(1) Preparation of a biodegradable polyester sheet

Two Teflon sheets were prepared. A stainless steel (SUS) frame (area of 12 cm $\times$ 12 cm) was placed on one Teflon sheet. 7 g of the biodegradable polyester resin pellets prepared in Example 1-1 was put in the stainless steel (SUS) frame, which was covered with another Teflon sheet. It was placed in the center of a hot press (manufacturer: WithLab, model name: WL 1600SA, 25 cm in length and 25 cm in width). The hot press was maintained for 3 minutes at a temperature of 200°C and a pressure of 10 MPa. After the frame was detached, the molded body was immediately immersed in water at 20°C and cooled for 30 seconds to prepare a biodegradable polyester sheet having a thickness of 300 $\mu$m.

(2) Preparation of a biodegradable polyester film

The biodegradable polyester sheet prepared in step (1) was stretched at a stretching rate of 300% and 800% in the MD direction at 45°C to prepare a biodegradable polyester film, respectively.

**Examples 2-2 to 2-5 and Comparative Examples 2-1 to 2-3**

Biodegradable polyester films were each prepared in the same manner as in Example 2-1, except that the biodegradable polyester resin pellets of Examples 1-2 to 1-5 and Comparative Examples 1-1 to 1-3 were each used. In Example 1-2, a biodegradable polyester film stretched at 100% and 600% was further prepared, respectively.

**[Test Example]**

**Test Example 2-1: Shift value of diffraction angle ($2\theta$)**

The biodegradable polyester films prepared in Examples 2-1 to 2-5 and Comparative Examples 2-1 to 2-3 were each measured for the shift value of the diffraction angle of ($2\Theta$) of 17.3° using wide-angle X-ray scattering (WAXD) (trade name: Ultima IV, manufacturer: Rigaku). Here, a wavelength was collided with a diffraction angle ($2\theta$) of 10° to 35° to measure the diffracted wavelength at a scan rate of 5°/minute in the same manner as in Test Example 1-1.

### Test Example 2-2: Crystallization temperature and heat of crystal fusion

The biodegradable polyester films prepared in Examples 2-1 to 2-5 and Comparative Examples 2-1 to 2-3 were each measured for the crystallization temperature and heat of crystal fusion using a differential scanning calorimeter.

Specifically, 3 mg of the film was cut into a cylindrical shape (thickness: 0.5 mm, circular diameter: 4 mm) and placed in an aluminum pan. The exothermic peak measured with a differential scanning calorimeter while the temperature was raised from 40°C to 180°C at a rate of 10°C/minute and then cooled to -50°C at a rate of 10°C/minute was the crystallization temperature (Tc). The heat of crystal fusion ($Hmc_2$) was calculated from the integral at the crystallization temperature (Tc).

In addition, the value of the following Equation 2 was calculated from the measurement results.

$$[\text{Equation 2}]$$

$$|Hmc_1 - Hmc_2| \geq 0.1$$

In Equation 2, $Hmc_1$ is the heat of crystal fusion (J/g) of the biodegradable polyester resin measured by differential scanning calorimetry, and $Hmc_2$ is the heat of crystal fusion (J/g) measured by differential scanning calorimetry for the biodegradable polyester film prepared at an elongation of 800%.

### Test Example 2-3: Tensile strength

The biodegradable polyester films prepared in Examples 2-1 to 2-5 and Comparative Examples 2-1 to 2-3 were each prepared to a specimen in accordance with ASTM D638 V-type. The tensile strength (MPa) was measured using INSTRON's universal testing machine (UTM, model name 4206-001) at a tensile speed of 100 mm/minute and calculated by the program built in the equipment.

### Test Example 2-4: Heat shrinkage rate

The biodegradable polyester films prepared in Examples 2-1 to 2-5 and Comparative Examples 2-1 to 2-3 were each cut into a length of 10 cm and a width of 150 mm to prepare a specimen, which was treated in a hot air oven at 80°C for 5 minutes. The heat shrinkage rate (%) in the longitudinal direction (MD direction) was calculated according to the following Equation A. Here, five specimens for each test were prepared to measure the heat shrinkage rate (%), and the average value thereof was calculated.

$$[\text{Equation A}]$$

$$Heat\ shrinkage\ rate = \frac{(x1 - x2)}{x1} \times 100$$

in Equation A, x1 is the length of the film before thermal treatment, and x2 is the length of the film shrunk by thermal treatment.

### Test Example 2-5: Biodegradability

The biodegradable polyester films prepared in Examples 2-1 to 2-5 and Comparative Examples 2-1 to 2-3 were each measured for the biodegradability by measuring the amount of carbon dioxide generated according to KS M3100-1. Specifically, an inoculum container having compost only manufactured in a compost factory was prepared. A test container in which a film in 5% by weight of the dry weight of the compost had been added was prepared. Thereafter, they were cultivated for 180 days under the conditions of a temperature of 58 $\pm$ 2°C, a moisture content of 50%, and an oxygen concentration of 6% or more. Carbon dioxide generated in each container was collected and titrated with an aqueous solution of phenolphthalein to measure the amount of carbon dioxide generated. The biodegradability was calculated from the measured amount of generated carbon dioxide according to the following Equation B.

[Equation B]

Biodegradability (%) = {(amount of $CO_2$ generated in a test container) – (amount of $CO_2$ generated in an inoculum container) × 100/(theoretical amount of $CO_2$ generated in a test container)

[Table 3]

|  |  | Ex. 2-1 | Ex. 2-2 | Ex. 2-3 | Ex. 2-4 | Ex. 2-5 |
|---|---|---|---|---|---|---|
| 300% stretched film | Shift value (°) | 17.4 | 17.6 | 17.5 | 17.4 | 17.5 |
|  | Tc (°C) | 39.8 | 48.7 | 46.7 | 39.6 | 46.5 |
|  | $Hmc_2$ (J/g) | 19.7 | 22.5 | 21.0 | 19.6 | 20.4 |
|  | $|Hmc_1 - Hmc_2|$ | 0.1 | 0.3 | 0.2 | 0.1 | 0.2 |
|  | Tensile strength (MPa) | 36 | 40 | 35 | 32 | 34 |
|  | Heat shrinkage rate (%) | 29 | 25 | 22 | 30 | 23 |
|  | Biodegradability (%) | 92 | 95 | 94 | 91 | 93 |
| 800% stretched film | Shift value (°) | 17.8 | 18.2 | 18.0 | 17.7 | 17.9 |
|  | Tc (°C) | 40.0 | 49.0 | 46.9 | 39.7 | 46.6 |
|  | $Hmc_2$ (J/g) | 19.9 | 22.7 | 21.2 | 19.7 | 20.5 |
|  | $|Hmc_1 - Hmc_2|$ | 0.3 | 0.5 | 0.4 | 0.2 | 0.3 |
|  | Tensile strength (MPa) | 38 | 42 | 36 | 33 | 35 |
|  | Heat shrinkage rate (%) | 27 | 22 | 20 | 29 | 22 |
|  | Biodegradability (%) | 92 | 95 | 94 | 91 | 93 |

[Table 4]

|  |  | C. Ex. 2-1 | C. Ex. 2-2 | C. Ex. 2-3 |
|---|---|---|---|---|
| 300% stretched film | Shift value (°) | 17.3 | 17.3 | 17.3 |
|  | Tc (°C) | 39.2 | 39.3 | 29.5 |
|  | $Hmc_2$ (J/g) | 19.0 | 18.7 | 16.4 |
|  | $|Hmc_1 - Hmc_2|$ | 0.1 | 0 | 0 |
|  | Tensile strength (MPa) | 29 | 28 | 22 |
|  | Heat shrinkage rate (%) | 51 | 55 | 58 |
|  | Biodegradability (%) | 91 | 91 | 95 |
| 800% stretched film | Shift value (°) | 17.4 | 17.4 | 17.3 |
|  | Tc (°C) | 39.3 | 39.4 | 29.5 |
|  | $Hmc_2$ (J/g) | 19.0 | 18.8 | 16.5 |
|  | $|Hmc_1 - Hmc_2|$ | 0.1 | 0.1 | 0.1 |
|  | Tensile strength (MPa) | 29.5 | 29 | 22.5 |
|  | Heat shrinkage rate (%) | 52 | 58 | 63 |
|  | Biodegradability (%) | 91 | 91 | 95 |

As can be seen from Tables 3 and 4, the biodegradable polyester films of Examples 2-1 to 2-5 were superior to the films of Comparative Examples 2-1 to 2-3 in all the characteristics of the heat of crystal fusion, tensile strength, heat shrinkage rate, and biodegradability.

Specifically, as the biodegradable polyester films of Examples 2-1 to 2-5 were prepared from the biodegradable polyester resin pellets of Examples 1-1 to 1-5, they were excellent in crystallinity, whereby biodegradability was not deteriorated, along with high tensile strength and low heat shrinkage rate. Thus, when a heavy object is applied to a molded product using the biodegradable polyester film, it is hardly broken during the additional stretching. Accordingly, when it is applied to various fields that require thermal resistance, mechanical properties, dimensional stability, and moldability, such as packaging materials such as disposable bags and food containers, and automobile interior parts, it has excellent stability.

In addition, Fig. 1 shows the X-ray diffraction (XRD) results of the biodegradable polyester film of Example 2-2. Specifically, it shows the results of X-ray diffraction analysis when the biodegradable polyester film of Example 2-2 was prepared at a stretching rate of 0% (before stretching, that is, the biodegradable polyester resin pellets of Example 1-2), 100%, 300%, 600%, and 800%, respectively. It was confirmed that the diffraction angle (2Θ) at which the peak appeared shifted with respect to the stretching rate. More specifically, when the diffraction angles at which the peak appeared at a stretching rate of 0% and 800% are compared, it was confirmed that 17.3° shifted to 18.2°.

As discussed above, the biodegradable polyester films of Examples 2-1 to 2-5 had a value of 0.1 or more according to Relationship 2, so that the crystal structure was changed to enhance crystallinity.

In contrast, as the films of Comparative Examples 2-1 to 2-3 were prepared from the pellets of Comparative Examples 1-1 to 1-3, they had low crystallinity, low tensile strength, and high heat shrinkage rate. Thus, when a heavy object is applied to a molded product using the film, it is likely to be broken during the additional stretching. Accordingly, when it is applied to various fields that require thermal resistance, mechanical properties, dimensional stability, and moldability, such as packaging materials such as disposable bags and food containers, and automobile interior parts, it has very low stability.

## Claims

1. A biodegradable polyester resin, which comprises a diol residue, an aromatic dicarboxylic acid residue, and an aliphatic dicarboxylic acid residue, and which has peaks at a diffraction angle (2Θ) of $17.3 \pm 0.3°$, $20.4 \pm 0.3°$, $23.3 \pm 0.3°$, and $25.0 \pm 0.3°$ in an X-ray diffraction spectrum (XRD) and a crystal size of 50 Å to 80 Å according to the following Equation 1:

$$[\text{Equation 1}]$$

$$Crystal\ size\ (\text{Å}) = \frac{0.9\lambda}{\beta \cos \theta}$$

in Equation 1, $\lambda$ is the wavelength (nm) in the X-ray diffraction spectrum (XRD), $\beta$ is the full width at half maximum (FWHM) at the diffraction angle (2Θ), $\theta$ is the half value of the diffraction angle (2θ), and the X-ray diffraction spectrum (XRD) has been measured at a diffraction angle (2θ) of 10° to 35° at a scan rate of 5°/minute.

2. The biodegradable polyester resin of claim 1, wherein the full width at half maximum (FWHM) at each diffraction angle (2Θ) is less than 1.0°/2θ.

3. The biodegradable polyester resin of claim 1 or 2, wherein the biodegradable polyester resin has a crystallization temperature (Tc) of 35°C to 65°C and a heat of crystal fusion (Hmci) of 19.1 J/g or more when measured by differential scanning calorimetry (DSC).

4. The biodegradable polyester resin of claim 1, 2 or 3, wherein the aromatic dicarboxylic acid comprises terephthalic acid, and the terephthalic acid has an average particle diameter (D50) of 10 μm to 400 μm in a particle size distribution (PSD) measured by a particle size analyzer Microtrac S3500 and a standard deviation of the average particle diameter (D50) of 100 or less.

5. The biodegradable polyester resin of any preceding claim, wherein the biodegradable polyester resin comprises a cellulose-based additive.

6. The biodegradable polyester resin of any preceding claim, wherein the biodegradable polyester resin comprises at least one inorganic filler selected from the group consisting of titanium dioxide ($TiO_2$), silicon dioxide ($SiO_2$), calcium carbonate ($CaCO_3$), talc, aluminum oxide ($Al_2O_3$), calcium oxide (CaO), and potassium oxide ($K_2O$), and the inorganic filler has an average particle diameter (D50) of 100 $\mu$m or less in a particle size distribution (PSD) as measured by a particle size analyzer Microtrac S3500 and a specific surface area of 100 $m^2$/g or more.

7. The biodegradable polyester resin of any preceding claim, wherein the biodegradable resin composition further comprises at least one resin selected from the group consisting of polylactic acid (PLA), polybutylene adipate terephthalate (PBAT), polybutylene succinate (PBS), polybutylene succinate terephthalate (PBST), polybutylene succinate adipate (PBSA), polybutylene adipate (PBA), and polycaprolactone (PCL).

8. The biodegradable polyester resin of any preceding claim, wherein the diol residue comprises a first diol residue and a second residue, each of which comprises a residue of 1,4-butanediol, 1,2-ethanediol, 1,3-propanediol, or a derivative thereof,

   the biodegradable polyester resin comprises a first repeat unit comprising the first diol residue and the aromatic dicarboxylic acid residue and a second repeat unit comprising the second diol residue and the aliphatic dicarboxylic acid residue, and
   the biodegradable polyester resin comprises the first repeat unit and the second repeat unit in the form of a block copolymer.

9. A process for preparing a biodegradable polyester resin, which comprises:

   mixing a diol and an aromatic dicarboxylic acid and pretreating the mixture to obtain a slurry;
   subjecting the slurry to a first esterification reaction, adding an aliphatic dicarboxylic acid or a diol and an aliphatic dicarboxylic acid to the resultant, and subjecting them to a second esterification reaction to obtain a prepolymer; and
   subjecting the prepolymer to a polycondensation reaction to obtain a polymer,
   wherein the biodegradable polyester resin comprises a diol residue, an aromatic dicarboxylic acid residue, and an aliphatic dicarboxylic acid residue, and
   the biodegradable polyester resin has peaks at a diffraction angle (2Θ) of 17.3 $\pm$ 0.3°, 20.4 $\pm$ 0.3°, 23.3 $\pm$ 0.3°, and 25.0 $\pm$ 0.3° in an X-ray diffraction spectrum (XRD), and
   the biodegradable polyester resin has a crystal size of 50 Å to 80 Å according to the following Equation 1:

$$[\text{Equation 1}]$$

$$Crystal\ size\ (\text{Å}) = \frac{0.9\lambda}{\beta \cos\theta}$$

   in Equation 1, $\lambda$ is the wavelength (nm) in the X-ray diffraction spectrum (XRD), $\beta$ is the full width at half maximum (FWHM) at the diffraction angle (2Θ), $\theta$ is the half value of the diffraction angle (2θ), and the X-ray diffraction spectrum (XRD) has been measured at a diffraction angle (2θ) of 10° to 35° at a scan rate of 5°/minute.

10. The process for preparing a biodegradable polyester resin of claim 9, which further comprises adding an inorganic filler slurry prior to the polycondensation reaction in an amount of 10,000 ppm or less based on the total weight of the reactant subjected to the polycondensation reaction.

11. The process for preparing a biodegradable polyester resin of claim 9 or 10, wherein the pretreatment is carried out by agitating a mixture of the diol and the aromatic dicarboxylic acid at 25°C to 100°C and 50 rpm to 500 rpm for 10 minutes or longer.

12. A biodegradable polyester film, which comprises a biodegradable polyester resin, wherein the biodegradable polyester resin comprises a diol residue, an aromatic dicarboxylic acid residue, and an aliphatic dicarboxylic acid residue,

   the biodegradable polyester resin has peaks at a diffraction angle (2Θ) of 17.3 $\pm$ 0.3°, 20.4 $\pm$ 0.3°, 23.3 $\pm$ 0.3°, and 25.0 $\pm$ 0.3° in an X-ray diffraction spectrum (XRD), and
   the biodegradable polyester resin has a crystal size of 50 Å to 80 Å according to the following Equation 1:

[Equation 1]

$$Crystal\ size\ (\text{Å}) = \frac{0.9\lambda}{\beta \cos \theta}$$

in Equation 1, $\lambda$ is the wavelength (nm) in the X-ray diffraction spectrum (XRD), $\beta$ is the full width at half maximum (FWHM) at the diffraction angle ($2\Theta$), $\theta$ is the half value of the diffraction angle ($2\theta$), and the X-ray diffraction spectrum (XRD) has been measured at a diffraction angle ($2\theta$) of 10° to 35° at a scan rate of 5°/minute.

13. The biodegradable polyester film of claim 12, wherein the biodegradable polyester film has a tensile strength of 30 MPa or more,

the biodegradable polyester film has a heat shrinkage rate of 50% or less in the main shrinkage direction upon thermal treatment at a temperature of 50°C for 5 minutes, and
the biodegradable polyester film has a peak at a diffraction angle ($2\Theta$) of 18.0 $\pm$ 0.3° in an X-ray diffraction (XRD) spectrum.

14. The biodegradable polyester film of claim 12 or 13, which satisfies the following Equation 2:

[Equation 2]

$$|Hmc_1 - Hmc_2| \geq 0.1$$

in Equation 2, $Hmc_1$ is the heat of crystal fusion (J/g) of the biodegradable polyester resin measured by differential scanning calorimetry, and $Hmc_2$ is the heat of crystal fusion (J/g) measured by differential scanning calorimetry for the biodegradable polyester film prepared at an elongation of 800%.

[Fig. 1]

Europäisches
Patentamt

European
Patent Office

Office européen
des brevets

# EUROPEAN SEARCH REPORT

Application Number

EP 23 17 4184

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 4 095 180 A1 (ECOVANCE CO LTD [KR]) 30 November 2022 (2022-11-30) | 1-5,8,9, 11-14 | INV. C08G63/183 |
| A,P | * paragraph [0122] - paragraph [0266]; examples 1-3, 6, 7; tables 1, 2 * | 6,7,10 | C08G63/78 C08G63/85 C08J5/18 |
| X,P | EP 4 095 179 A1 (ECOVANCE CO LTD [KR]) 30 November 2022 (2022-11-30) | 1-5,8,9, 11-14 | C08K3/22 C08L67/02 |
| A,P | * paragraph [0112] - paragraph [0249]; examples 1-3, 5, 6; tables 1, 2 * | 6,7,10 | ADD. C08L1/02 |
| X | EP 3 916 036 A1 (SKC CO LTD [KR]) 1 December 2021 (2021-12-01) | 1-3,5,8, 9,12-14 | |
| A | * examples Preparation ex. C1-1, C1-2, D1-1, D1-2, D1-3; tables 3, 4 * | 4,6,7, 10,11 | |
| X | CN 110 305 304 B (XINJIANG GENERAL PLASTIC HIGH PERFORMANCE ENGINEERING TECH RESEARCH CE) 25 June 2021 (2021-06-25) | 1-3,6,9, 10,12,14 | |
| A | * example 7 * | 4,5,7,8, 11,13 | |

TECHNICAL FIELDS
SEARCHED      (IPC)

C08G
C08J
C08K
C08L

The present search report has been drawn up for all claims

| Place of search | Date of completion of the search | Examiner |
|---|---|---|
| The Hague | 10 October 2023 | Enescu, Cristina |

EPO FORM 1503 03.82 (P04C01)

## ANNEX TO THE EUROPEAN SEARCH REPORT
## ON EUROPEAN PATENT APPLICATION NO.

EP 23 17 4184

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2023

| Patent document cited in search report | | Publication date | Patent family member(s) | | Publication date |
|---|---|---|---|---|---|
| EP 4095180 | A1 | 30-11-2022 | CN | 115386072 A | 25-11-2022 |
| | | | EP | 4095180 A1 | 30-11-2022 |
| | | | JP | 7291268 B2 | 14-06-2023 |
| | | | JP | 2022181205 A | 07-12-2022 |
| | | | JP | 2023058640 A | 25-04-2023 |
| | | | KR | 102431671 B1 | 12-08-2022 |
| | | | KR | 20220159255 A | 02-12-2022 |
| | | | KR | 20230058600 A | 03-05-2023 |
| | | | TW | 202246381 A | 01-12-2022 |
| | | | US | 2022389154 A1 | 08-12-2022 |
| | | | US | 2023257516 A1 | 17-08-2023 |
| EP 4095179 | A1 | 30-11-2022 | CN | 115386073 A | 25-11-2022 |
| | | | EP | 4095179 A1 | 30-11-2022 |
| | | | JP | 2022181209 A | 07-12-2022 |
| | | | KR | 102421030 B1 | 14-07-2022 |
| | | | TW | 202246380 A | 01-12-2022 |
| | | | US | 2022389215 A1 | 08-12-2022 |
| EP 3916036 | A1 | 01-12-2021 | CN | 113736069 A | 03-12-2021 |
| | | | EP | 3916036 A1 | 01-12-2021 |
| | | | JP | 7282124 B2 | 26-05-2023 |
| | | | JP | 2021188038 A | 13-12-2021 |
| | | | US | 2021380757 A1 | 09-12-2021 |
| | | | WO | 2021241931 A1 | 02-12-2021 |
| CN 110305304 | B | 25-06-2021 | NONE | | |

EPO FORM P0459

For more details about this annex : see Official Journal of the European Patent Office, No. 12/82

**EP 4 282 896 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20070007281